# EUROPEAN PATENT APPLICATION

(11) **EP 3 653 980 A1**
(43) Date of publication of application: **20.05.2020**
(21) Application number: 19189850.1
(22) Date of filing: 02.08.2019
(51) Int. Cl.: F26B 25/06, G06K 7/10, G06K 17/00, G06Q 10/08, B65D 1/22

(54) **CIRCULATION BOX WITH RFID CHIP**

(30) Priority: 16.11.2018 KR 20180141896
(71) Applicant: Metatek Co., Ltd., Nonsan-si, Chungcheongnam-do 32925 (KR); Bok, Young Ho, Suwon-si, Gyeonggi-do 16304 (KR); Bok, So Yeon, Suwon-si, Gyeonggi-do 16304 (KR)
(72) Inventor: BOK, Young Ho, Suwon-si, Gyeonggi-do 16304 (KR); BOK, So Yeon, Suwon-si, Gyeonggi-do 16304 (KR)
(74) Representative: Tribalyte Ideas

(57) **Abstract**

The present invention relates to a circulation box with an RFID chip, including an ID groove that is easy to waterproof and low in cost such that an RFID chip can be effectively inserted into the same, wherein in order to classify main transport lines, individual workbenches, products, and workers in a meat cuts processing factory, RFID chips are installed on circulation boxes so that the data can be managed integrally by matching with product IDs or worker IDs and, through the database management of the workers and the products on the basis of the RFID chips installed on the circulation boxes, it is possible to prevent data disruption caused by human management in various basic data during work and to control production per worker, thereby enabling quality control and hygiene management.

## Description

### TECHNICAL FIELD

The present invention relates to a circulation box used in the meat industry and, more specifically, to a circulation box with an RFID chip, including an ID groove that is easy to waterproof and low in cost such that an RFID chip can be effectively inserted into the same, wherein in order to classify main transport lines, individual workbenches, products, and workers in the so-called meat cuts processing factory, in which raw materials are supplied through the main transport line, a plurality of individual workbenches are provided at the side of the main transport line, and the work of cutting the raw materials into small units are carried out at the plurality of individual workbenches, RFID chips are installed on circulation boxes so that the data can be managed integrally by matching with product IDs or worker IDs and, through the database management of the workers and the products on the basis of the RFID chips installed on the circulation boxes, it is possible to prevent data disruption caused by human management in various basic data during work and to control production per worker, thereby enabling quality control and hygiene management.

### BACKGROUND ART

Currently, in meat processing automation, cutting work after slaughtering is mostly carried out manually. In such a case, it takes a long time to measure the weight of the cuts after such individual work and the efficiency is very low.

In addition, it is preferable to carry out weighing immediately after cutting and then transferring the cuts to a next process to carry out inspection and packaging. However, until now, there is no automated facility and processing method corresponding to this.

The processing system of the existing meat cuts processing plant is roughly divided into a processing system, in which both raw materials and cuts are transferred using only conveyors, and a processing system, in which raw materials are transferred through conveyors while cuts are classified into circulation boxes by products and transferred by means of the circulation boxes.

It is well known that once used, the used circulation boxes are cleaned and then supplied to the workbenches, so that the processing system using such circulation boxes has higher hygiene than the system using conveyors only.

In the case of the processing system including such conveyors, in order to send the meat cuts produced by each individual worker to the next process, there is a system where sorting and feeding are performed through a separate sorting operation at the end of an operation line and a system where the feeding is performed after inputting data of the cuts according to the type of the cuts by means of an additional input device at the time of supplying or working to carry out feeding the cuts to a next process automatically.

Hereinafter, a conventional circulation box with a bar code will be described with reference to the accompanying drawings.

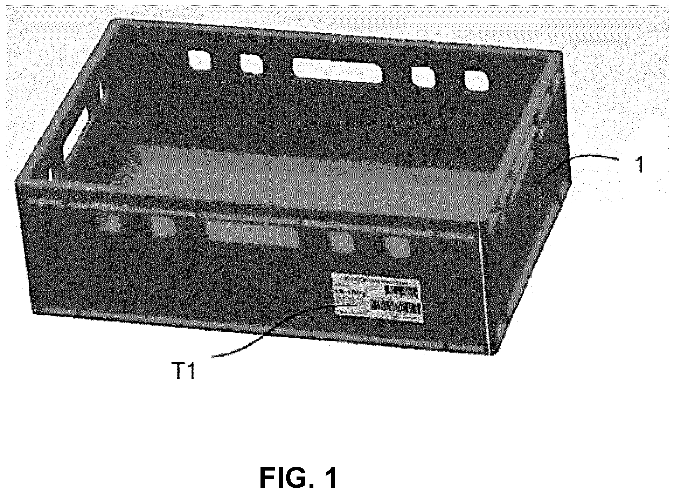

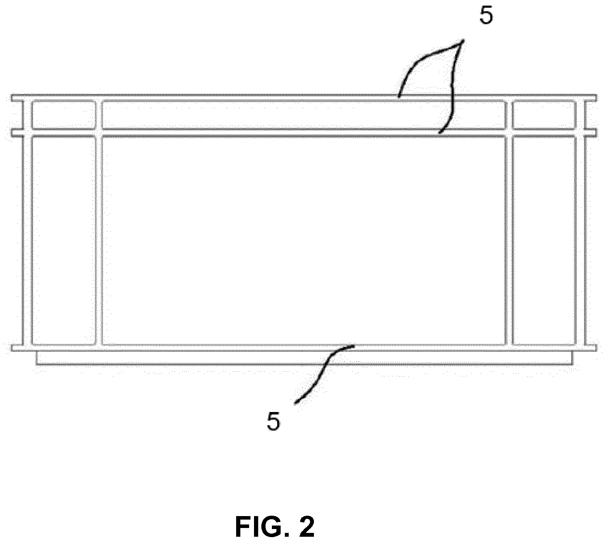

Fig. 1 is a view showing a circulation box with a normal bar code attached thereto and Fig. 2 is a side view showing the circulation box shown in Fig. 1.

There is a method, in which the circulation box with such a bar code is formed in a rectangular shape and is opened at one side such that objects to be processed (raw materials) can be received through the open side, and a bar code is printed and attached to a side surface of the circulation box as shown in Fig. 1.

This circulation box includes an upper rib and a lower rib for reinforcing the plate-shaped circulation box as shown in Fig. 2.

However, when using a sticker type bar code, there is a problem that the bar code is easily damaged and the bar code is damaged during the washing process using hot water of 60°C or higher in order to ensure hygiene such that a bar code must be attached again.

Furthermore, such bar codes of the boxes re-supplied after once used and supplied are mixed. Therefore, after loading meat cuts into the boxes supplied to each operator, the contents of the boxes cannot be identified unless each operator reads the bar codes, which are the individual identifiers of the boxes, and inputs the types of the meat cuts.

In order to read a bar code with a bar code reader, a bar code reader must be supplied for each operator. However, the cost is uneconomical (for example, for a workplace with 200 workers, the bar code cost of KRW 100,000 reaches KRW 20 million) and if wired communication lines are required, such communication lines are difficult to be installed and may be unsanitary.

In addition, it is difficult to fabricate a bar code reader as a waterproof type in structure. However, the meat processing factory has a high humidity, always using water basically, and has a high frequency of malfunction due to the salt from raw materials.

In order to solve the problems, there is a method of using RFIDs. However, it is not easy to attach the RFIDs to the circulation boxes. Therefore, the method of inserting separate IDs in the circulation boxes or the method of re-attaching printed bar codes as described above have been preferred.

In order to attach RFIDs, there may be a method of embedding RFIDs in the injection molding of the circulation boxes and a method of embedding the RFIDs by forming RFID insertion grooves on the circulation boxes. However, such methods still have problems that in the case of the method of embedding RFID at the time of injection molding, the circulation boxes must be discarded together with RFIDs when the RFIDs have abnormalities, that is, when the RFIDs are damaged, and in the case of the method of forming the RFID insertion grooves on the circulation boxes, the direction of such insertion grooves is orthogonal to the separation direction of the injection mold by 90 degrees and thus the mold becomes complicated and the manufacturing cost thereof rises accordingly.

### Prior Art Documents

[Patent Document 1] CN 201830824 U, 18 May 2011
[Patent Document 2] US 4385419 A, 31 May 1983
[Patent Document 3] WO 2013032327 A1, 07 March 2013
[Patent Document 4] Korean Laid-open Publication No. 10-2014-0014524

### DETAILED DESCRIPTION OF THE INVENTION

### Technical Problem

Accordingly, the present invention has been made in an effort to solve the above-mentioned problems and disadvantages occurring in the prior arts and has an objective to provide a circulation box with an RFID chip, including an ID groove that is easy to waterproof and low in cost such that an RFID chip can be effectively inserted into the same, wherein in order to classify main transport lines, individual workbenches, products, and workers in a meat cuts processing factory, RFID chips are installed on circulation boxes so that the data can be managed integrally by matching with product IDs or worker IDs and, through the database management of the workers and the products on the basis of the RFID chips installed on the circulation boxes, it is possible to prevent data disruption caused by human management in various basic data during work and to control production per worker, thereby enabling quality control and hygiene management.

### Technical Solution

In order to achieve the objective of the present invention as described above, in a circulation box which is opened at a top side and the remaining five sides are made of walls, there is provided a circulation box with an RFID chip characterized in that when the walls at the five sides of the circulation box are assumed to be vertical walls, the vertical walls of the five sides are made of thin plates to lighten the weight of the circulation box and to increase production cost efficiency, a plurality of ribs are formed on the side surfaces of the circulation box in a direction orthogonal to the vertical walls by 90 degrees to reinforce the circulation box made of the thin plates in the horizontal direction thereof, and an RFID chip is fixed to parts of the plurality of ribs, or if a vertical groove or a vertical hole is formed such that the RFID chip is inserted into the vertical groove or the vertical hole by using external pressure, the RFID chip is fixed using the restoring force of the ribs.

Herein, one vertical groove or vertical hole is formed in two horizontal ribs or a plurality of vertical grooves or vertical holes are formed in two horizontal ribs.

### Advantageous Effects

The present invention has the following effects.

First, an RFID chip is inserted and fixed to the side surface of a circulation box for transporting meat to be processed or raw materials and at the time of inserting meat or raw materials to the circulation box and sending the circulation box to the next process, the information on the ID of the circulation box is acquired and matched with the information on the IDs of the products previously supplied to workers without any additional management person for selecting or classifying products, such that the workers and products can be tracked and distinguished even if such circulation boxes are in disorder afterwards.

Second, it is not necessary to attach any bar code which is prone to contamination or damage to the products in the circulation box every time, management is carried out by matching the unique number of the box IDs, the worker IDs, and the product IDs such that sorting and loading in the following processes can be automatically carried out, the first-in-first-out operations indispensable in food processing is fully implemented improving food hygiene, and scales for measuring the weight of raw materials and products are installed at the entrance and exit to collect data per circulation box, thereby enabling the yield, productivity and quality control per worker.

### BRIEF DESCRIPTION OF DRAWINGS

Fig. 1 is a view showing a circulation box with a normal bar code attached thereto,
Fig. 2 is a side view showing the circulation box shown in Fig. 1,
Fig. 3 is a view for explaining a circulation box for mounting an RFID chip according to a first embodiment of the present invention,
Fig. 4 is a view for explaining a circulation box for mounting an RFID chip according to a second embodiment of the present invention,
Fig. 5 is a view for showing an embodiment, in which an RFID chip is mounted on the circulation box shown in Fig. 4,
Fig. 6 is a view for explaining various types of RFID chips to be mounted on a circulation box with an RFID chip according to the present invention,
Fig. 7 is a view for explaining embodiments of various types of RFID chip mounting means for mounting an RFID chip according to the present invention, and
Fig. 8 is a view for explaining embodiments of various types of RFID chips to be mounted on the circulation box with an RFID chip according to the present invention.

### Brief Explanation of Reference Symbols

1: circulation box
2: upper edge
3: raw material space
4, 4a, 4b, 4c,4d: RFID chip fixing means
5, 5a, 5b: rib
6: RFID chip
T1: Barcode

### BEST MODE FOR CARRYING OUT THE INVENTION

Hereinafter, preferred embodiments of the present invention will now be described in detail with reference to the accompanying drawings. In addition, the terms used in the present invention have selected common terms that are widely used at present, but in some cases, there are some terms selected arbitrarily by the applicant. In this case, since the meaning is described in detail in the corresponding part of the detailed description of the invention, it is intended to disclose that the present invention should be grasped as a meaning of a term that is not the simple name of the term. Also, in describing the embodiment, the description of the technology contents known to the technical field to which the present invention belongs, and which is not directly related to the present invention is omitted. This is to avoid the unnecessary explanations so that the present invention can be clearly conveyed.

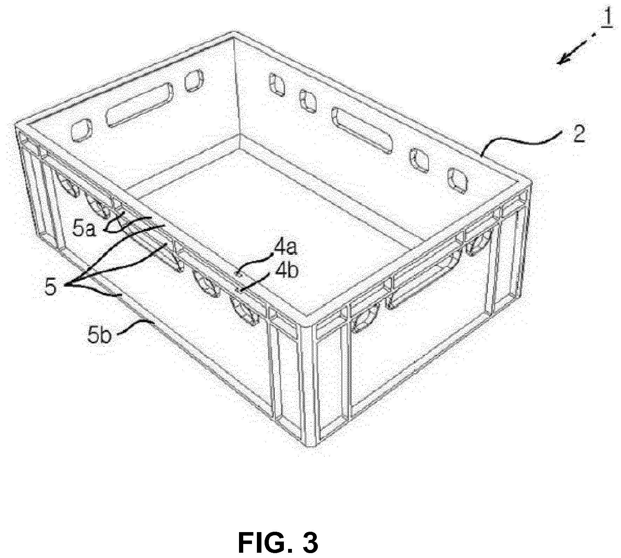

Fig. 3 is a view for explaining a circulation box for mounting an RFID chip according to a first embodiment of the present invention.

As shown in Fig. 3, it is preferable that a circulation box for mounting an RFID chip, according to the present invention, includes an edge 2 formed in a rectangular shape and a space 3 formed inside the edge 2 to accommodate worked raw materials. Herein, circulation box 1 may have an RFID chip fixing means 4 for fixing a circulation box identifier. It is preferable that the RFID chip fixing means 4 is formed on one side surface of the circulation box 1, which is exposed to the outside. Herein, the circulation box 1 includes a rib 5 for reinforcing the circulation box 1 and the rib 5 normally includes two upper side ribs 5a and one lower side rib 5b, wherein the RFID chip fixing means 4 includes two RFID chip fixing means 4a and 4b formed on the upper side ribs 5a as shown in Fig. 3. However, the number of such RFID chip fixing means 4a and 4b are not particularly limited to two, but a single RFID chip fixing means may be formed as mentioned later or a plurality of RFID chip fixing means more than two may be formed although not shown.

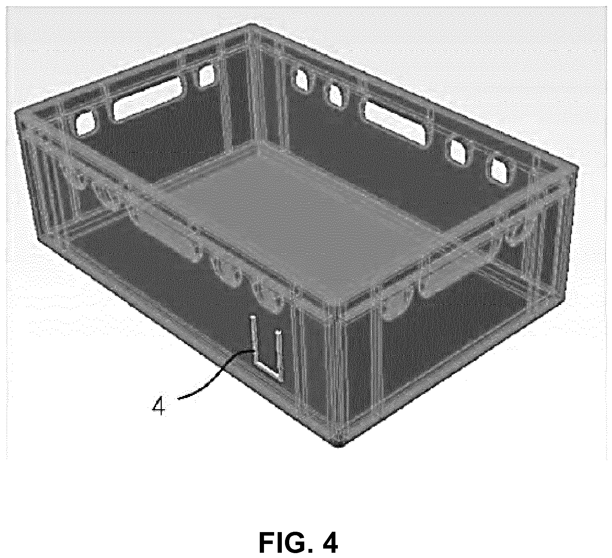

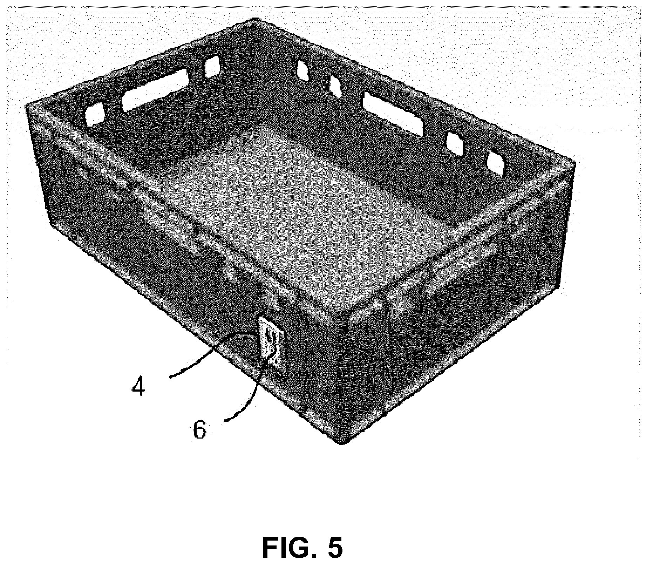

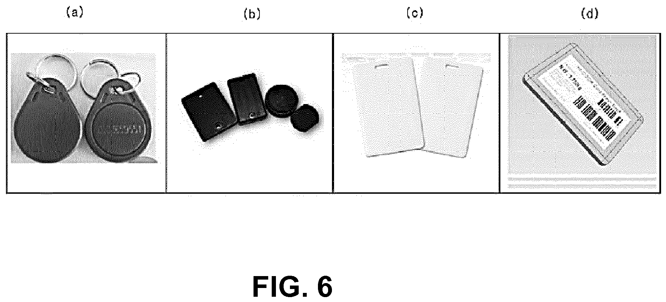

Fig. 4 is a view for explaining a circulation box for mounting an RFID chip according to a second embodiment of the present invention, Fig. 5 is a view for showing an embodiment, in which an RFID chip is mounted on the circulation box shown in Fig. 4, and Fig. 6 is a view for explaining various types of RFID chips to be mounted on the circulation box with an RFID chip according to the present invention.

According to the second embodiment of the present invention, a circulation box 1 for mounting an RFID chip includes an RFID chip fixing means 4 formed in the shape of a guide groove on one surface of the circulation box 1, as shown in Fig. 4, such that an RFID chip is inserted downward therein from above. The RFID chip fixing means 4 includes both side surfaces and bottom surface, which are closed, a front surface portion exposed for smooth communication, and a top side, which is opened for the insertion of an RFID chip 6.

In the case of such a structure, there is an advantage that the RFID chip 6 can be easily changed or replaced in case of failure.

Meanwhile, Fig. 6 shows embodiments of various types of RFID chips to be mounted on a circulation box with an RFID chip according to the present invention, wherein it could be noted that the RFID chip 6 shown in Fig. 6a includes a ring added for easy attachment or detachment of the RFID chip 6. Fig. 6b and Fig. 6c show RFID chips 6 having shapes that facilitate the attachment but prevent easy detachment, wherein the RFID chip 6 has a detachment hole to facilitate exchange at the time of detachment. Meanwhile, Fig. 6d shows an RFID chip 6 having the feature of the RFID chip 6 printed in the shape of a bar code on one surface that is exposed.

Fig. 6d shows that the characteristics of the RFID chip 6 are printed in a bar code form on one outer surface thereof that is exposed to the outside. If the bar code is coated after printing, the bar code will not be easily erased.

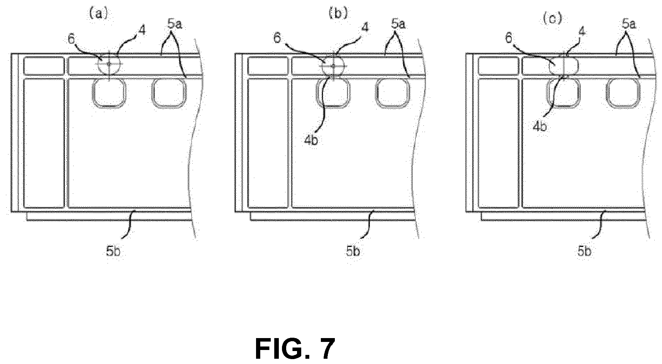

Fig. 7 is a view for explaining embodiments, in which various types of RFID chips have been mounted on the circulation box with an RFID chip according to the invention.

The embodiments, in which various types of RFID chips have been mounted on the circulation box with an RFID chip according to the invention, are as shown in Fig. 7, in which Fig. 7a shows an RFID chip fixing means 4 basically formed in a hole shape only in one of the upper side ribs 5b as shown in Fig. 7a.

In addition, Fig. 7b shows RFID chip fixing means 4 formed in a hole shape in the both upper side ribs 5b that face each other.

Furthermore, Fig. 7c shows RFID chip fixing means 4 formed in a groove shape in the both upper side ribs 5b that face each other.

Herein, the RFID chip fixing means 4 may be formed in a hole shape that is penetrated and a groove shape that is blocked at one side. The RFID chip fixing means 4 may be formed variously according to the shape of an RFID chip or user convenience and is not necessarily limited.

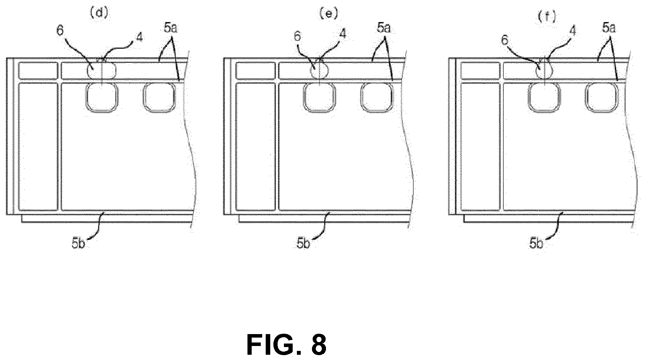

Fig. 8 is a view for explaining embodiments of various types of RFID chips to be mounted on the circulation box with an RFID chip according to the present invention.

If it is assumed that the walls of the circulation box 1 are vertical walls for the sake of convenience, when determining the direction of the ribs 5 for reinforcing the circulation box 1 in the horizontal direction, a plurality of ribs 5 are formed in a direction orthogonal to the horizontal direction, that is, the vertical walls by 90 degrees to reinforce the wall of the box, which is made of a thin plate to lighten the weight of the circulation box 1 and increase production cost efficiency.

Herein, as the RFID chip is inserted by the elasticity of the ribs 5 formed in the horizontal direction or by forming a small vertical groove or vertical hole and using external force, the RFID chip 6 is fixed by the restoring force of the horizontal rib of the circulation box.

That is, as for the embodiments of various types of RFID chips to be mounted on the circulation box with an RFID chip according to the present invention, Fig. 8a shows an RFID chip 6 fixed in the upper side ribs 5a, wherein the RFID chip 6 is long in the lateral direction and relatively short in the vertical direction.

In addition, Fig. 8b shows a circular RFID chip 6 fixed between the upper side ribs 5a, wherein the RFID chip 6 is circular.

Fig. 8c shows a fixed RFID chip 6, which has one side protruded in the shape of a gourd or a calabash according to the shape of the RFID chip fixing means 4 provided to the upper side ribs 5a.

In the case where the RFID chip fixing means 4 is formed in the ribs 5 of the circulation box 1 and an RFID chip 6 is inserted and fixed in the RFID chip fixing means 4 as described above, at the time of inserting meat or raw materials to the circulation box 1 and sending the circulation box to the next process, the information on the ID of the circulation box 1 is acquired and matched with the information on the IDs of the products previously supplied to workers, without any additional management person for selecting or classifying products, such that the workers and the products can be tracked and distinguished even if such circulation boxes 1 are in disorder afterwards.

In addition, it is not necessary to attach any bar code which is prone to contamination or damage to the products in the circulation box 1 every time, management is carried out by matching the unique number of the box IDs, the worker IDs, and the product IDs such that sorting and loading in the following processes can be automatically carried out, the first-in-first-out operations indispensable in food processing are fully implemented improving food hygiene, and scales for measuring the weight of raw materials and products are installed at the entrance and exit to collect data per circulation box 1, thereby enabling the yield, productivity and quality control per worker.

Although the present invention has been described above with reference to the examples mentioned above, the present invention is not necessarily limited to these examples, and various modifications can be made without departing from the technical idea of the present invention. Accordingly, the examples disclosed in the present invention are intended to illustrate and not limit the technical idea of the present invention, and the scope of the technical idea of the present invention is not limited by these examples. It should be noted that the scope of protection of the present invention is to be construed under the following claims, and all technical ideas within the scope of the same shall be construed as being included in the scope of the present invention.

## Claims

1. A circulation box comprising an open top side and five remaining sides made of walls, the circulation box further comprising an RFID chip and being **characterized in that**
when the walls are vertical, the walls are made of thin plates to lighten the weight of the circulation box (1) and to increase production cost efficiency,
the circulation box further comprises a plurality of ribs (5) which are formed on the remaining sides surfaces of the circulation box (1) protruding in a direction orthogonal to the vertical walls by 90 degrees so as to reinforce the circulation box (1) made of the thin plates in the horizontal direction thereof, and
the RFID chip (6) is fixed to portions of the plurality of ribs (5), or the RFID chip (6) is inserted into a vertical groove or a vertical hole by using external pressure, the RFID chip (6) being fixed using the restoring force of the ribs (5).

2. The circulation box according to claim 1, wherein one vertical groove or vertical hole is formed in two horizontal ribs or a plurality of vertical grooves or vertical holes are formed in two horizontal ribs.
